# EUROPEAN PATENT SPECIFICATION

(11) **EP 4 265 935 B1**
(45) Date of publication and mention of the grant of the patent: **21.01.2026**
(21) Application number: 21906563.8
(22) Date of filing: 13.12.2021
(51) Int. Cl.: F16D 65/02, F16D 55/228

(54) **CALIPER BODY FOR VEHICULAR DISC BRAKE**
SATTELKÖRPER FÜR FAHRZEUGSCHEIBENBREMSE
CORPS D'ÉTRIER POUR FREIN À DISQUE DE VÉHICULE

(30) Priority: 17.12.2020 JP 2020209305
(43) Date of publication of application: 25.10.2023
(60) Divisional application: 25221859.9
(73) Proprietor: Astemo, Ltd., Tokyo 100-0004 (JP)
(72) Inventor: ATSUTA, Daiki, Hitachinaka-shi, Ibaraki 312-8503 (JP)
(74) Representative: Hoefer & Partner Patentanwälte mbB
(86) International application number: PCT/JP2021/045787
(87) International publication number: WO 2022/131201

(56) References cited:
- JP-A- 2000 337 408
- JP-A- 2000 337 408
- JP-A- 2011 163 401
- JP-A- 2011 163 444
- JP-A- H05 288 228
- JP-A- H05 288 228
- JP-Y2- H0 747 626
- JP-Y2- H0 747 626

## Description

### Technical Field

The present invention relates to a caliper body of a disc brake for a vehicle, and more particularly, to a split-type caliper body formed by coupling a pair of caliper half bodies arranged on both sides of a disc rotor with a bridge portion.

### Background Art

In the related art, as a split-type caliper body formed by coupling a pair of caliper half-bodies arranged on both sides of a disc rotor with a bridge portion, there is a caliper body including a radial mount-type vehicle body mounting portion having an insertion hole for a vehicle body mounting bolt in a disc radial direction in the caliper half-body arranged on an opposing vehicle body side of a disc rotor (for example, see PTL 1), and a caliper body including an axial mount-type vehicle body mounting portion having an insertion hole for a vehicle body mounting bolt in a disc axial direction (for example, see PTL 2).

### Citation list

### Patent Literature

PTL 1: JPH07-12149A
PTL 2: JP4212185B
Prior art document JP 2011- 163 401 A refers to a caliper body of a disk brake for a vehicle, in which cylinder holes provided side by side in the disk circumferential direction are securely communicated, and a workability is improved without requiring high accuracy in boring a through-hole used as a union hole or a bleeder hole. Bottom part sides of adjacent cylinder holes are communicated with each other by a hydraulic fluid communication hole, and the hydraulic fluid communication hole and the cylinder holes are formed of one shell core. A hole bored toward the hydraulic fluid communication hole from the external surface of the caliper body is processed into the union hole.
Prior art document JP 2011- 163 444 A shows a disk brake for a vehicle that is configured to suppress concentration of stress on both ends of the disk rotary inlet side and disk outlet side of a pad spring body. A second arm part and a third arm part of a pad spring, each have: an outlet side stress absorbing part and an inlet side stress absorbing part which are formed by being inclined and projected outside the disk radial direction from the body and then turned down gradually inside the disk radial direction from the top parts; and an outlet side pin contact part and an inlet side pin contact part which continuously project from those parts and contact the inner side in the disk radial direction of a first hanger pin or a second hanger pin, respectively. The second arm part has a resilient part formed at the end side of the outlet side pin contact part by turning it up in a U shape, while the third arm part has a second pad pressing part formed at the end side of the inlet side pin contact part by bending it outside the disk radial direction in a channel shape.
Prior art document JP 2000- 337 408 A proposes improvement in productivity and assemblebility of a caliper body and to reduce the number of machining man-hours after formation of a caliper body. A pair of caliper half-bodies molded in a same shape by a single mold are used in a caliper body. A union hole and a bleeder hole are after-formed in the same shape in the caliper half-bodies after molding, and the caliper half-bodies in the same finishing shape are integrally coupled together through coupling bolts.

### Summary of Invention

### Technical Problem

As shown in PTLs 1 and 2, in the caliper bodies having different types to be mounted on a vehicle body, for example, even when vehicle-body-side caliper half-bodies have the same shape, the caliper bodies are designed and produced individually.

Therefore, an object of the present invention is to provide a caliper body of a disc brake for a vehicle, the caliper body being capable of being formed by selectively assembling either a radial-mount vehicle-body-side-opposing caliper half-body including a radial mount-type vehicle body mounting portion or an axial-mount vehicle-body-side-opposing caliper half-body including an axial mount-type vehicle body mounting portion to a vehicle-body-side caliper half-body.

### Solution to Problem

The object underlying the present invention is achieved by a caliper body of a disc brake for a vehicle according to the appended independent claim 1. Preferred embodiment is defined in dependent claim 2. In order to achieve the above-described object, a caliper body of a disc brake for a vehicle of the present invention is a caliper body of a disc brake for a vehicle, the caliper body being capable of being selectively assembled by joining, via a joint surface, either a radial-mount vehicle-body-side-opposing caliper half-body including a radial mount-type vehicle body mounting portion or an axial-mount vehicle-body-side-opposing caliper half-body including an axial mount-type vehicle body mounting portion on an opposing vehicle body side of a disc rotor to a vehicle-body-side caliper half-body disposed on a vehicle body-side of the disc rotor, and fastening the same by a coupling bolt. The vehicle-body-side caliper half-body, the radial-mount vehicle-body-side-opposing caliper half-body, and the axial-mount vehicle-body-side-opposing caliper half-body are respectively formed with a hydraulic fluid introduction hole configured to allow a hydraulic fluid to be introduced into a cylinder hole from the joint surface toward a bottom portion side of the cylinder hole. The introduction hole formed in the radial-mount vehicle-body-side-opposing caliper half-body and the introduction hole formed in the axial-mount vehicle-body-side-opposing caliper half-body individually communicate with the introduction hole formed in the vehicle-body-side caliper half-body at the joint surface.

In addition, it is preferred that the radial-mount vehicle-body-side-opposing caliper half-body and the axial-mount vehicle-body-side-opposing caliper half-body respectively have a seal groove provided on an opening outer periphery of the introduction hole that opens to the joint surface, any one of a union hole configured to allow a hydraulic fluid to be introduced into the introduction hole and a bleeder hole configured to allow air in the hydraulic fluid to be discharged, and a female screw hole into which the coupling bolt is fastened.

### Advantageous Effects of Invention

According to the caliper body of a disc brake for a vehicle of the present invention, the vehicle-body-side caliper half-body, the radial-mount vehicle-body-side-opposing caliper half-body, and the axial-mount vehicle-body-side-opposing caliper half-body are respectively formed with the hydraulic fluid introduction hole configured to allow the hydraulic fluid to be introduced into the cylinder hole from the joint surface of caliper half-body toward the bottom portion side of the cylinder hole, and the introduction hole formed in the radial-mount vehicle-body-side-opposing caliper half-body and the introduction hole formed in the axial-mount vehicle-body-side-opposing caliper half-body individually communicate with the introduction hole formed in the vehicle-body-side caliper half-body at the joint surface. Accordingly, regardless of whether the radial-mount vehicle-body-side-opposing caliper half-body or the axial-mount vehicle-body-side-opposing caliper half-body is joined to the vehicle-body-side caliper half-body, the introduction holes communicate with each other and the hydraulic fluid can be supplied to each cylinder hole. Accordingly, either the radial-mount vehicle-body-side-opposing caliper half-body or the axial-mount vehicle-body-side-opposing caliper half-body can be selectively assembled to the vehicle-body-side caliper half-body, and thus the same vehicle-body-side caliper half-bodies can be used in the caliper bodies having different types to be mounted on a vehicle body, and a cost can be reduced.

In addition, the radial-mount vehicle-body-side-opposing caliper half-body and the axial-mount vehicle-body-side-opposing caliper half-body respectively have the seal groove provided on the opening outer periphery of the introduction hole that opens to the joint surface, any one of the union hole configured to allow the hydraulic fluid to be introduced into the introduction hole and the bleeder hole configured to allow air in the hydraulic fluid to be discharged, and the female screw hole into which the coupling bolt is fastened. Accordingly, a shape of the vehicle-body-side caliper half-body can be formed as simple as possible, and the cost can be further reduced.

### Brief Description of Drawings

[FIG. 1] FIG. 1 is a front view of a disc brake for a vehicle showing an embodiment of the present invention in which a radial-mount vehicle-body-side-opposing caliper half-body is used in a caliper body.
[FIG. 2] FIG. 2 is a rear view of the same disc brake for a vehicle.
[FIG. 3] FIG. 3 is a plan view of the same disc brake for a vehicle.
[FIG. 4] FIG. 4 is a side view of the same disc brake for a vehicle.
[FIG. 5] FIG. 5 is a cross-sectional view taken along a line V-V in FIG. 4.
[FIG. 6] FIG. 6 is a cross-sectional view taken along a line VI-VI in FIG. 1.
[FIG. 7] FIG. 7 is a cross-sectional view taken along a line VII-VII in FIG. 2.
[FIG. 8] FIG. 8 is a front view of main portions in a state in which a union bolt and a hose banjo are attached to a union hole.
[FIG. 9] FIG. 9 is a side view of the state in which the union bolt and the hose banjo are attached to the union hole.
[FIG. 10] FIG. 10 is a cross-sectional view taken along a line X-X in FIG. 8.
[FIG. 11] FIG. 11 is a front view of a caliper body showing a first embodiment of the present invention.
[FIG. 12] FIG. 12 is a rear view of a caliper half-body on an opposing vehicle body side.
[FIG. 13] FIG. 13 is a cross-sectional view taken along a line XIII-XIII in FIG. 11.
[FIG. 14] FIG. 14 is a front view of the caliper body on a vehicle body-side.
[FIG. 15] FIG. 15 is a rear view of a caliper half-body on the vehicle body-side.
[FIG. 16] FIG. 16 is a cross-sectional view taken along a line XVI-XVI in FIG. 15.
[FIG. 17] FIG. 17 is a front view of a disc brake for a vehicle using a caliper body in which the radial-mount vehicle-body-side-opposing caliper half-body is replaced with an axial-mount vehicle-body-side-opposing caliper half-body.
[FIG. 18] FIG. 18 is a side view of the same disc brake for a vehicle.

### Description of Embodiments

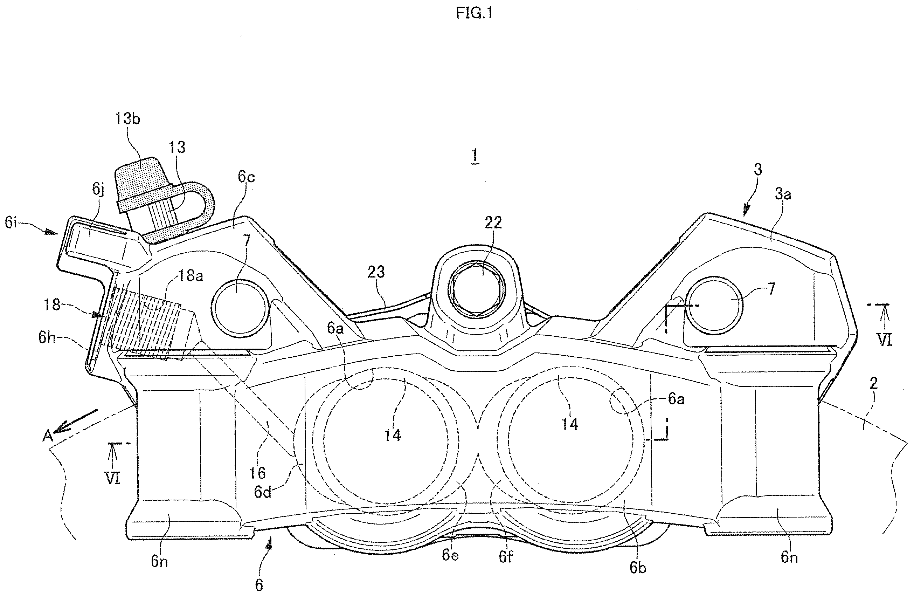

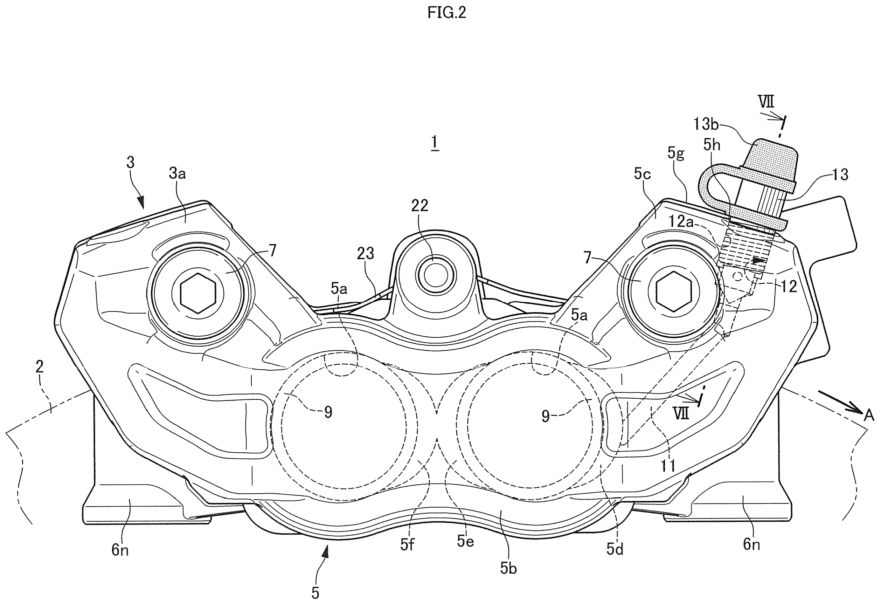

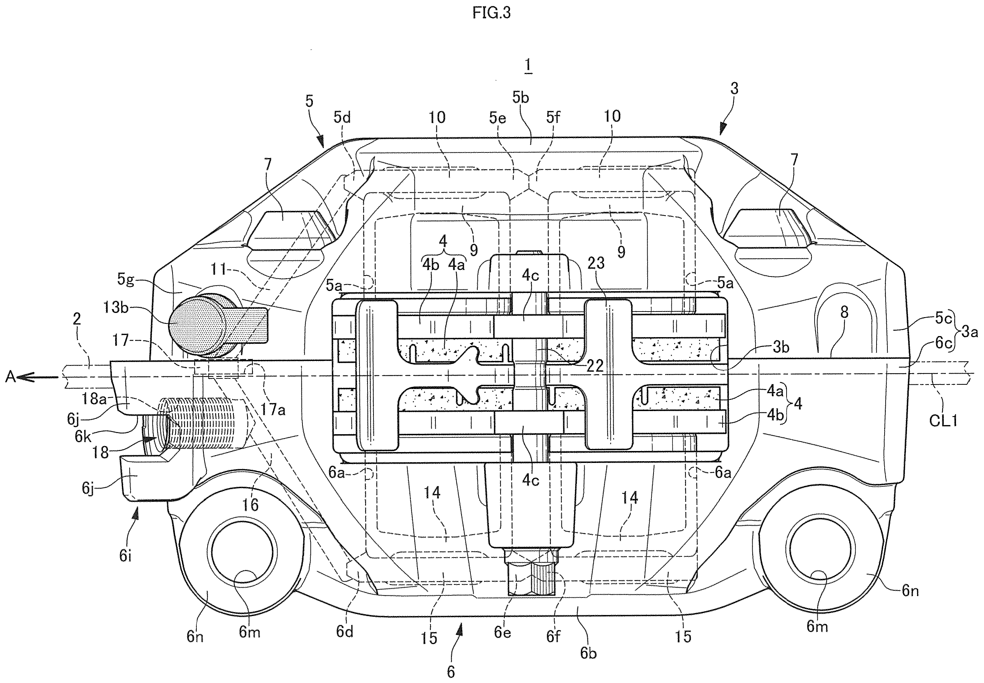

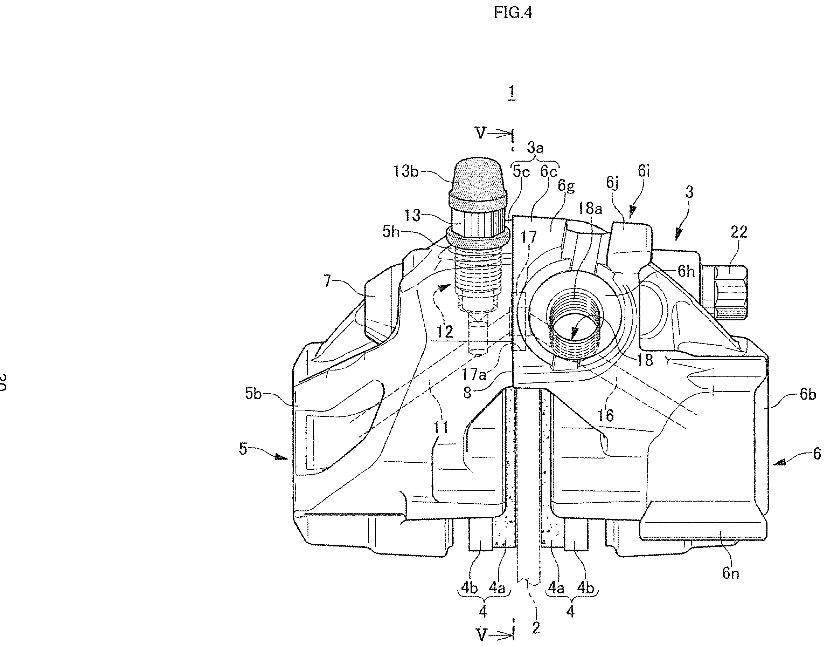

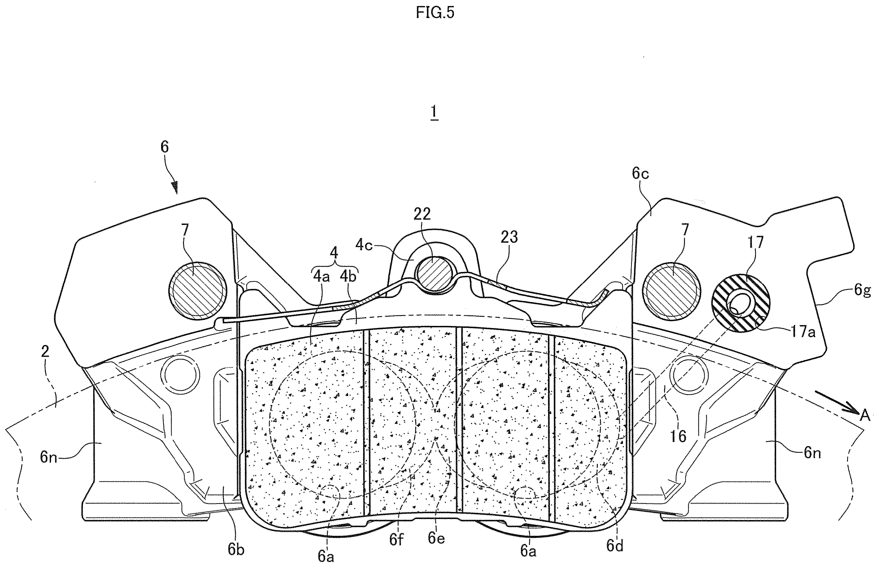

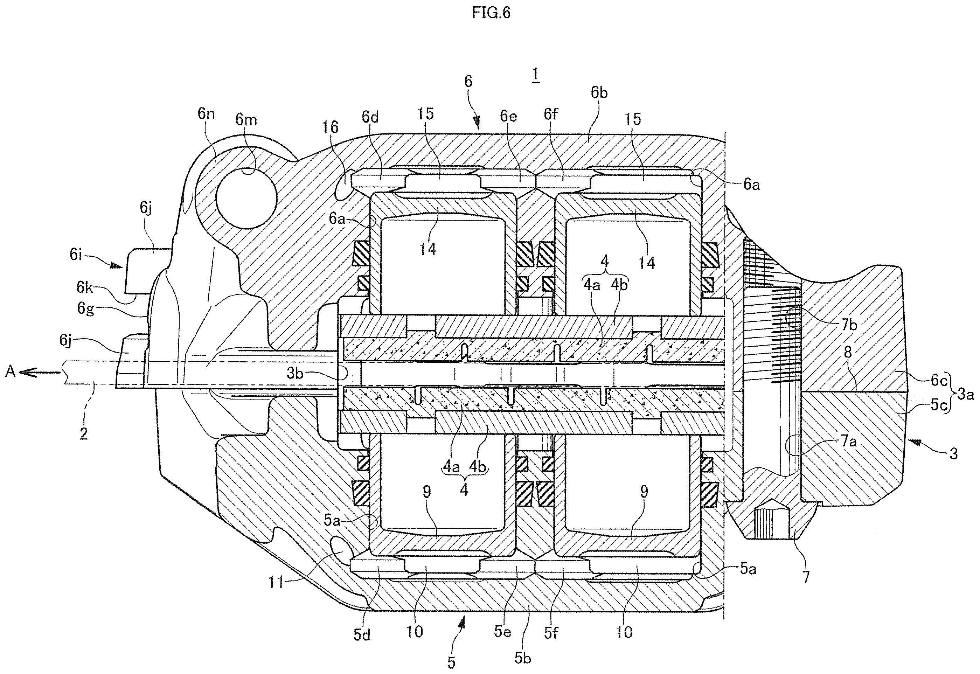

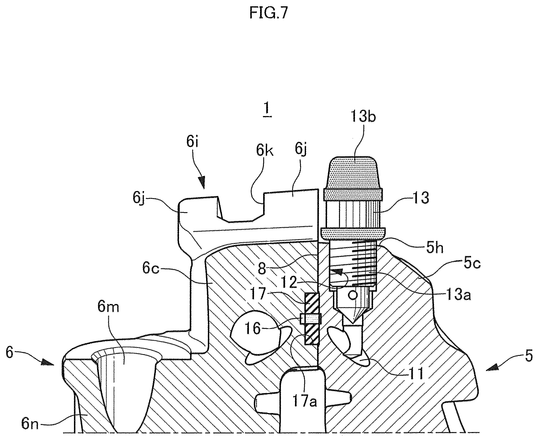

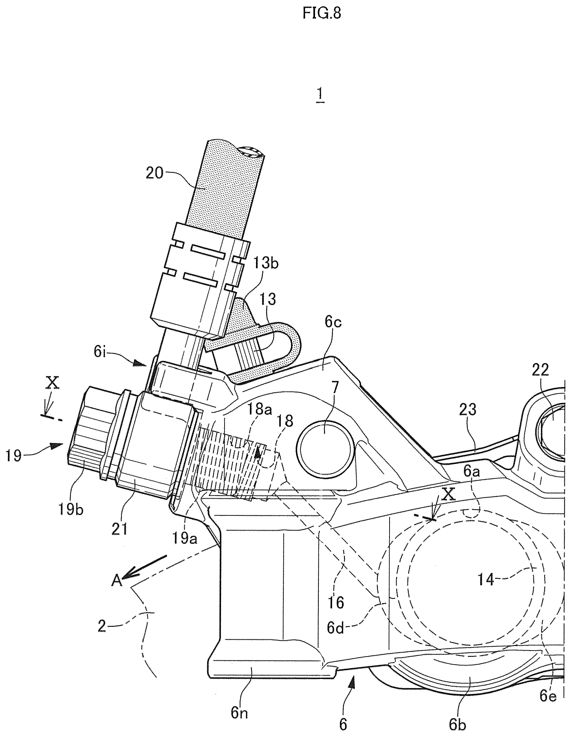

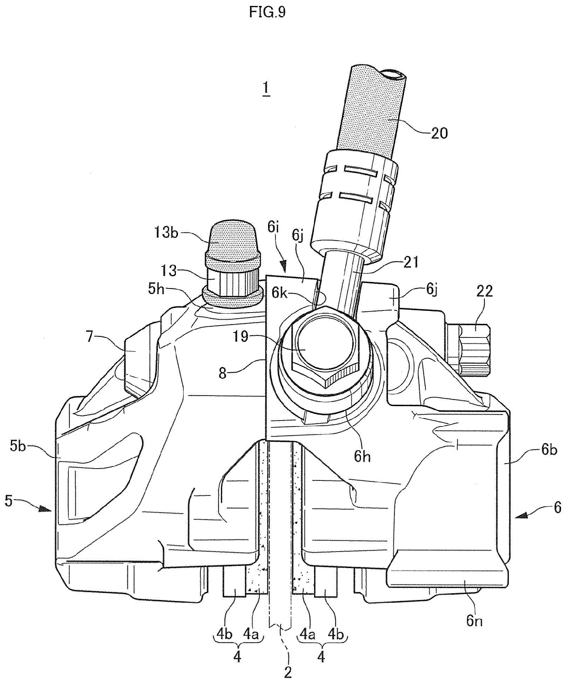

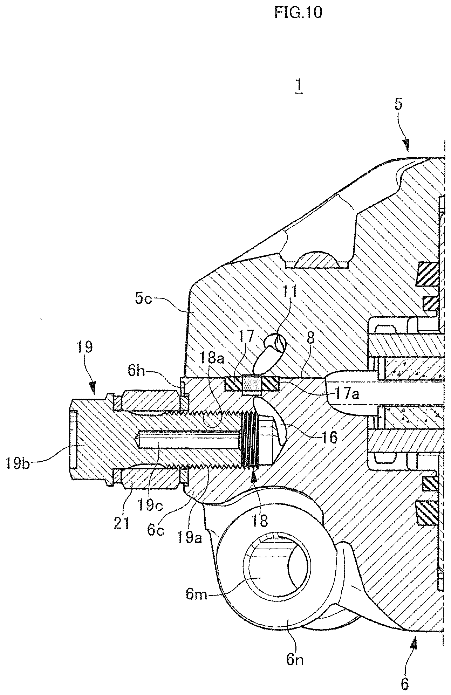

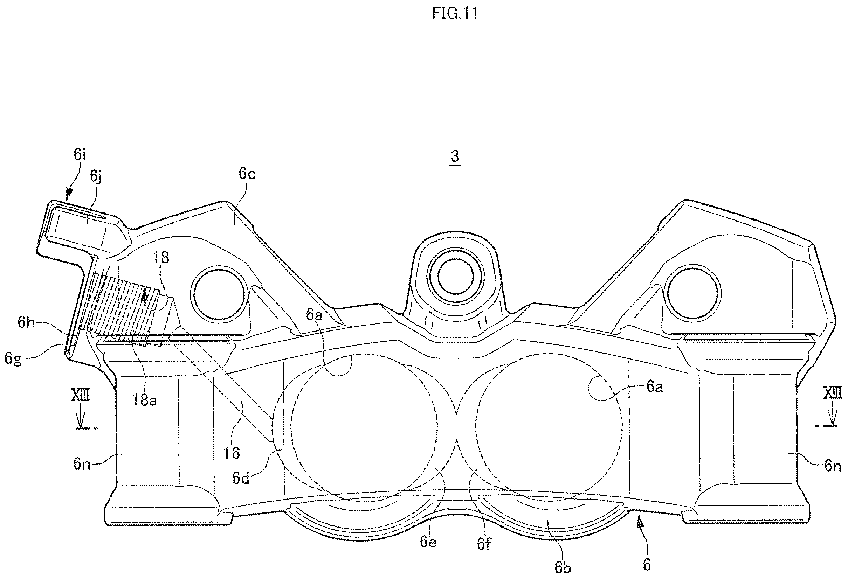

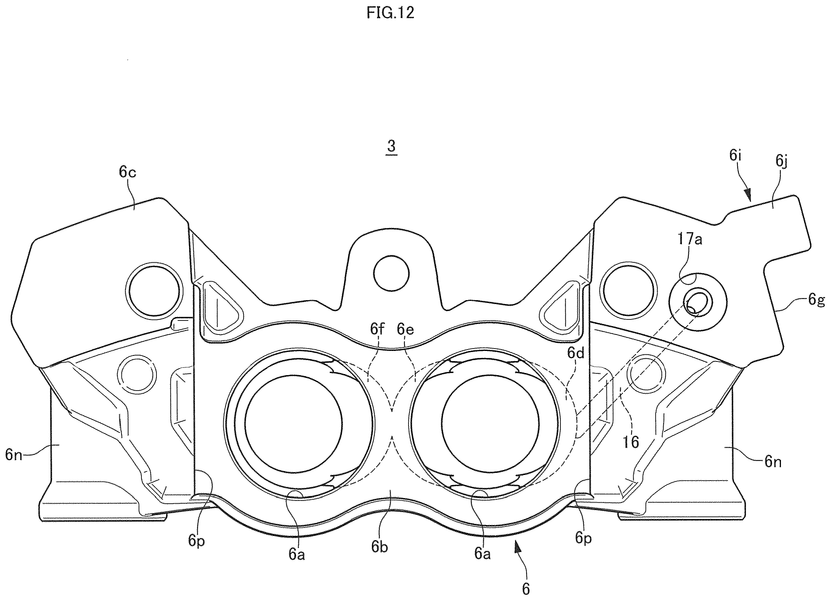

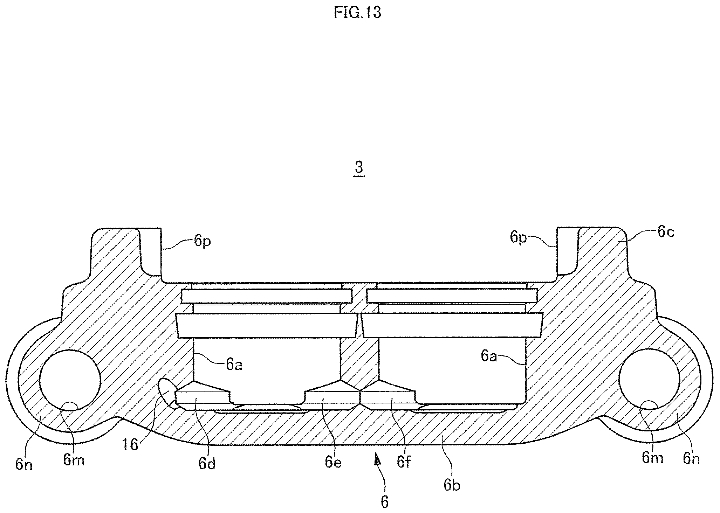

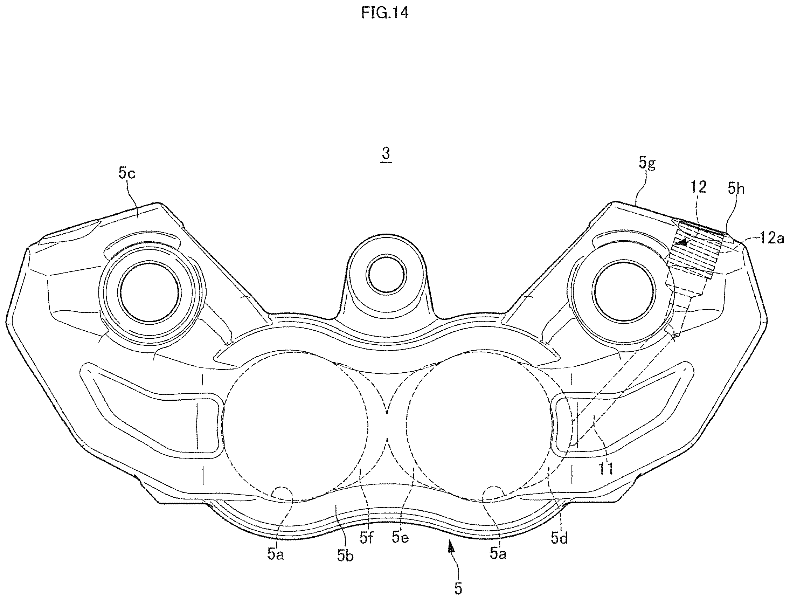

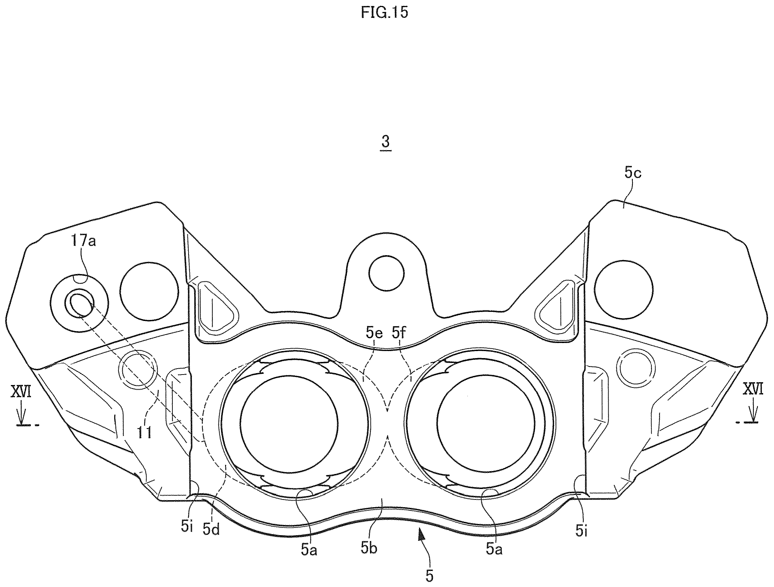

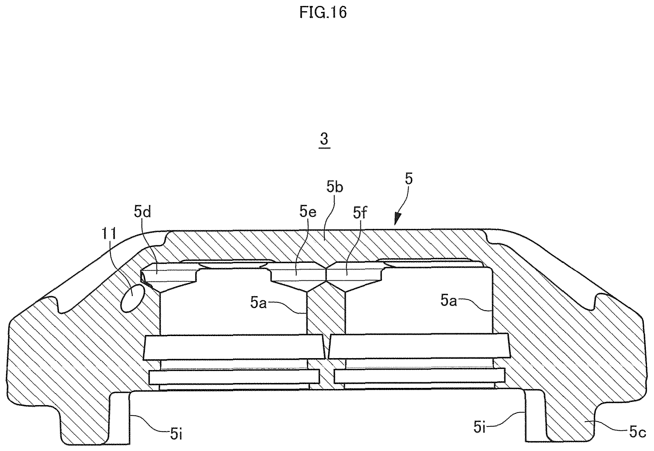

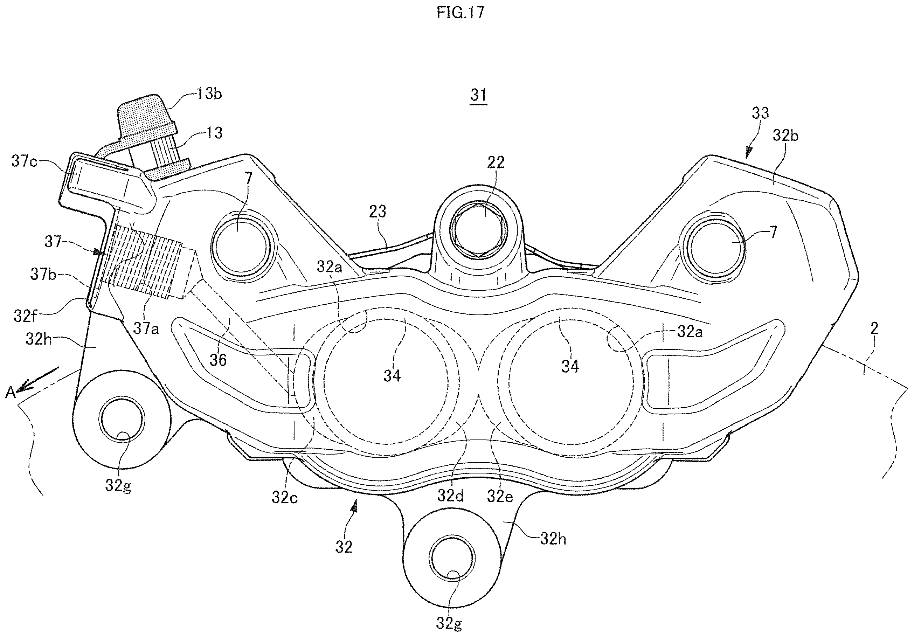

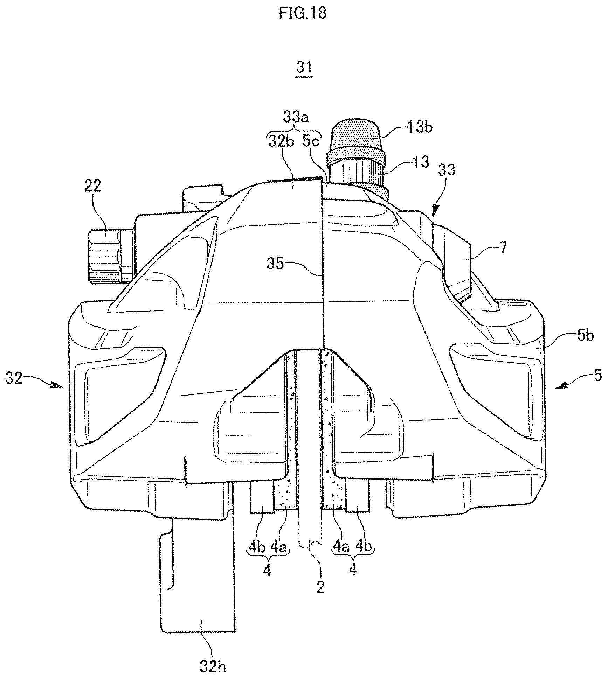

FIGS. 1 to 18 show an embodiment of a disc brake for a vehicle of the present invention, in which FIGS. 1 to 16 show a disc brake for a vehicle in which a radial-mount vehicle-body-side-opposing caliper half-body is used in a caliper body, and FIGS. 17 and 18 show a disc brake for a vehicle using a caliper body in which the radial-mount vehicle-body-side-opposing caliper half-body is replaced with an axial-mount vehicle-body-side-opposing caliper half-body. An arrow A indicates a rotation direction of a disc rotor that rotates integrally with wheels when a vehicle moves forward, and a disc outward-rotation-side and a disc inward-rotation-side to be described later are for when the vehicle moves forward.

As shown in FIGS. 1 to 16, a disc brake 1 for a vehicle includes a disc rotor 2 that rotates integrally with wheels (not shown) in an arrow A direction, a caliper body 3 attached to a vehicle body on one side of the disc rotor 2, and a pair of friction pads 4, 4 that are arranged inside the caliper body 3 in a manner of facing each other with the disc rotor 2 interposed therebetween.

The caliper body 3 is formed by integrally coupling, with two coupling bolts 7, 7, a vehicle-body-side caliper half-body 5 and a radial-mount vehicle-body-side-opposing caliper half-body **6,** which are divided by a bridge portion 3a straddling an outer peripheral side of the disc rotor **2.**

The vehicle-body-side caliper half-body 5 includes an acting portion 5b having cylinder holes 5a, 5a arranged side by side in a disc circumferential direction, and a bridge half body 5c that is substantially half of the bridge portion 3a. Similar to the vehicle-body-side caliper half-body 5, the radial-mount vehicle-body-side-opposing caliper half-body 6 includes an acting portion 6b having cylinder holes 6a, 6a arranged side by side in the disc circumferential direction, and a bridge half body 6c that is substantially half of the bridge portion 3a. In addition, a length of the bridge half body 6c of the radial-mount vehicle-body-side-opposing caliper half-body 6 in a disc axial direction is larger than a length of the bridge half body 5c of the vehicle-body-side caliper half-body 5 in the disc axial direction. When the caliper body 3 formed by butt-joining the bridge half bodies 5c and 6c is assembled to the vehicle body, a joint surface 8 is located on a vehicle body-side with respect to a center CL1 in a width direction of the disc rotor 2.

In the vehicle-body-side caliper half-body 5, pistons 9, 9 are inserted into the cylinder holes 5a, 5a, and hydraulic pressure chambers 10, 10 into which a hydraulic fluid is introduced are defined between bottom portion sides of the cylinder holes 5a, 5a and the pistons 9, 9. In addition, a first hydraulic fluid introduction hole 11 (introduction hole of the present invention) is drilled from a dividing surface serving as the joint surface 8 on the disc outward-rotation-side of the bridge half body 5c toward the hydraulic pressure chamber 10 of the cylinder hole 5a on the disc outward-rotation-side. A bottom portion of the cylinder hole 5a on the disc outward-rotation-side includes a first contouring processed portion 5d that allows the hydraulic pressure chamber 10 on the disc outward-rotation-side and the first hydraulic fluid introduction hole 11 to communicate with each other by a contouring process, and a second contouring processed portion 5e that is contoured toward the hydraulic pressure chamber 10 on the disc inward-rotation-side. Further, a bottom portion of the cylinder hole 5a on the disc inward-rotation-side includes a third contouring processed portion 5f that is contoured toward the second contouring processed portion 5e. The second contouring processed portion 5e and the third contouring processed portion 5f communicate with each other, whereby the first hydraulic fluid introduction hole 11, the hydraulic pressure chamber 10 on the disc outward-rotation-side, and the hydraulic pressure chamber 10 on the disc inward-rotation-side communicate with one another.

A bleeder hole 12 that opens to a disc radial direction outer end surface 5g and communicates with the first hydraulic fluid introduction hole 11 is provided on a disc radial direction outer end on the disc outward-rotation-side of the bridge half body 5c. The bleeder hole 12 is formed with, on an opening side, a female screw portion 12a into which a bleeder screw 13 is screwed, and the disc radial direction outer end surface 5g on an opening outer periphery is formed with a mounting seat surface 5h for the bleeder screw 13. The bleeder screw 13 includes an air discharge hole on an inner peripheral portion thereof and a male screw portion 13a, which is screwed into the female screw portion 12a, on an outer peripheral portion thereof, and a rubber bleeder cap 13b is covered on a tip head portion.

Similar to the vehicle-body-side caliper half-body 5, in the radial-mount vehicle-body-side-opposing caliper half-body 6, pistons 14, 14 are inserted into the cylinder holes 6a, 6a, and hydraulic pressure chambers 15, 15 are defined between bottom portion sides of the cylinder holes 6a, 6a and the pistons 14, 14. In addition, a second hydraulic fluid introduction hole 16 (introduction hole of the present invention) is drilled from a dividing surface serving as the joint surface 8 on the disc outward-rotation-side of the bridge half body 6c toward the hydraulic pressure chamber 15 on the disc outward-rotation-side. The first hydraulic fluid introduction hole 11 and the second hydraulic fluid introduction hole 16 communicate with each other at the joint surface 8. In addition, a seal groove 17a is provided on the opening outer periphery in which the second hydraulic fluid introduction hole 16 opens to the joint surface 8, and a seal member 17 is attached to the seal groove 17a. A bottom portion of the cylinder hole 6a on the disc outward-rotation-side includes a fourth contouring processed portion 6d that allows the hydraulic pressure chamber 15 on the disc outward-rotation-side and the second hydraulic fluid introduction hole 16 to communicate with each other by a contouring process, and a fifth contouring processed portion 6e that is contoured toward the hydraulic pressure chamber 15 on the disc inward-rotation-side. Further, a bottom portion of the cylinder hole 6a on the disc inward-rotation-side includes a sixth contouring processed portion 6f that is contoured toward the fifth contouring processed portion 6e. The fifth contouring processed portion 6e and the sixth contouring processed portion 6f communicate with each other, whereby the second hydraulic fluid introduction hole 16, the hydraulic pressure chamber 15 on the disc outward-rotation-side, and the hydraulic pressure chamber 15 on the disc inward-rotation-side communicate with one another.

Further, a union hole 18 that opens to a disc outward-rotation-side end surface 6g and communicates with the second hydraulic fluid introduction hole 16 is provided on a disc outward-rotation-side end of the bridge half body 6c. The union hole 18 is formed with, on an opening side, a female screw portion 18a into which a union bolt 19 is screwed, and the disc outward-rotation-side end surface 6g on an opening outer periphery is formed with a mounting seat surface 6h for the union bolt 19. A hose banjo 21 fixed to an end of a brake hose 20 is attached to the union bolt 19, and a rotation-stop portion 6i for the hose banjo 21 is formed on an outer periphery of the mounting seat surface 6h. The rotation-stop portion 6i includes a wall portion 6j that protrudes from an outer peripheral side of the mounting seat surface 6h and protects the coupling between the union bolt 19 and the hose banjo 21, and an engaging portion 6k that is obtained by cutting out a part of the wall portion 6j and stops rotation of the hose banjo 21. The hose banjo 21 is not co-rotated when the union bolt 19 is screwed into the union hole 18 by clamping the hose banjo 21 with the engaging portion 6k. The union bolt 19 includes a male screw portion 19a that is screwed into the female screw portion 18a and a hexagonal head portion 19b, a fluid communication hole 19c is formed inside the male screw portion 19a, and the brake hose 20 communicates with the union hole 18 via the union bolt 19.

Radial mount-type vehicle body mounting portions 6n, 6n having mounting bolt insertion holes 6m, 6m in a disc radial direction are formed on the disc inward-rotation-side and the disc outward-rotation-side of the radial-mount vehicle-body-side-opposing caliper half-body 6, and the caliper body 3 is attached to the vehicle body by screwing mounting bolts inserted into the mounting bolt insertion holes 6m, 6m to caliper mounting portions provided on the vehicle body-side.

In the caliper body 3, the vehicle-body-side caliper half-body 5 and the radial-mount vehicle-body-side-opposing caliper half-body 6 formed in this manner are joined with the bridge portion 3a, and the coupling bolts 7, 7 inserted into bolt insertion holes 7a, 7a formed in the vehicle-body-side caliper half-body 5 are fastened to female screw holes 7b, 7b formed in the radial-mount vehicle-body-side-opposing caliper half-body **6,** whereby the first hydraulic fluid introduction hole 11 and the second hydraulic fluid introduction hole 16 communicate with each other, and accordingly, the first hydraulic fluid introduction hole 11 and the second hydraulic fluid introduction hole 16 communicate with the hydraulic pressure chambers 10, 10 of the vehicle-body-side caliper half-body 5 and the hydraulic pressure chambers 15, 15 of the radial-mount vehicle-body-side-opposing caliper half-body **6.** Further, the union hole 18 communicates with the second hydraulic fluid introduction hole 16, and thus a hydraulic fluid is supplied to the hydraulic pressure chambers 10, 10, 15, and 15 via the union bolt 19, the first hydraulic fluid introduction hole 11, and the second hydraulic fluid introduction hole 16. In addition, the bleeder hole 12 communicates with the first hydraulic fluid introduction hole 11, and thus air mixed in the hydraulic fluid introduced into the first hydraulic fluid introduction hole 11, the second hydraulic fluid introduction hole 16, and the hydraulic pressure chambers 10, 10, 15, and 15 is discharged to the outside via the bleeder screw 13.

The friction pad 4 includes a lining 4a which is in sliding contact with a side surface of the disc rotor 2, and a metal back plate 4b to which the lining 4a is adhered. A hanging piece 4c extends from an upper center of the back plate 4b, and a hanger pin 22 is inserted into the hanging piece 4c. The hanger pin 22 extends across both the acting portions 5b and 6b in the disc axial direction through a ceiling opening 3b formed in the bridge portion 3a of the caliper body 3, and is movable in the disc axial direction between torque receiving portions 5i, 5i, 6p, and 6p respectively provided on the disc inward-rotation-side and the disc outward-rotation-side of the vehicle-body-side caliper half-body 5 and the radial-mount vehicle-body-side-opposing caliper half-body 6. In addition, a pad spring 23 is provided over the back plate 4b, the bridge portion 3a, and the hanger pin 22, and the friction pads 4, 4 are pressed toward the disc outward-rotation-side and a disc radial direction inner side.

A caliper body 33 formed by replacing the above-described radial-mount vehicle-body-side-opposing caliper half-body 6 with an axial-mount vehicle-body-side-opposing caliper half-body 32 is used in a disc brake 31 for a vehicle shown in FIGS. 17 and 18.

In the axial-mount vehicle-body-side-opposing caliper half-body 32, pistons 34, 34 are inserted into cylinder holes 32a, 32a, and hydraulic pressure chambers (not shown) are defined between bottom portion sides of the cylinder holes 32a, 32a and the pistons 34, 34. In addition, a second hydraulic fluid introduction hole 36 (introduction hole of the present invention) is drilled from a dividing surface serving as a joint surface 35 on a disc outward-rotation-side of a bridge half body 32b toward the hydraulic pressure chamber on the disc outward-rotation-side, and the first hydraulic fluid introduction hole 11 formed on the vehicle-body-side caliper half-body 5 and the second hydraulic fluid introduction hole 36 communicate with each other at the joint surface 35. In addition, a seal groove (not shown) is provided on an opening outer periphery in which the second hydraulic fluid introduction hole 36 opens to the joint surface 35, and a seal member (not shown) is attached to the seal groove.

A bottom portion of the cylinder hole 32a on the disc outward-rotation-side includes a seventh contouring processed portion 32c that allows the hydraulic pressure chamber on the disc outward-rotation-side and the second hydraulic fluid introduction hole 36 to communicate with each other by a contouring process, and an eighth contouring processed portion 32d that is contoured toward the hydraulic pressure chamber on a disc inward-rotation-side. Further, a bottom portion of the cylinder hole on the disc inward-rotation-side includes a ninth contouring processed portion 32e that is contoured toward the eighth contouring processed portion 32d. The eighth contouring processed portion 32d and the ninth contouring processed portion 32e communicate with each other, whereby the second hydraulic fluid introduction hole 36, the hydraulic pressure chamber on the disc outward-rotation-side, and the hydraulic pressure chamber on the disc inward-rotation-side communicate with one another. Further, a union hole 37 that opens to a disc outward-rotation-side end surface 32f and communicates with the second hydraulic fluid introduction hole 36 is provided on a disc outward-rotation-side end of the bridge half body 32b. The union hole 37 includes a female screw portion 37a and a mounting seat surface 37b provided on a disc outward-rotation-side end surface 32f on the opening outer periphery, and a rotation-stop portion 37c for a hose banjo is formed on an outer periphery of the mounting seat surface 37b.

Vehicle body mounting arms 32h, 32h (vehicle body mounting portions of the present invention) having mounting bolt insertion holes 32g, 32g in a disc axial direction extend from the disc outward-rotation-side and a disc radial direction inner side of the axial-mount vehicle-body-side-opposing caliper half-body 32, and the caliper body 33 is attached to a vehicle body by screwing mounting bolts inserted into the mounting bolt insertion holes 32g, 32g into caliper mounting portions provided on a vehicle body-side.

In the caliper body 33, the vehicle-body-side caliper half-body 5 and the axial-mount vehicle-body-side-opposing caliper half-body 32 are joined with a bridge portion 33a, and the coupling bolts 7, 7 inserted into the bolt insertion holes 7a, 7a formed in the vehicle-body-side caliper half-body 5 are fastened to female screw holes (not shown) formed in the axial-mount vehicle-body-side-opposing caliper half-body 32, whereby the first hydraulic fluid introduction hole 11 and the second hydraulic fluid introduction hole 36 communicate with each other, and accordingly, the first hydraulic fluid introduction hole 11 and the second hydraulic fluid introduction hole 36 communicate with the hydraulic pressure chambers. Further, the union hole 37 communicates with the second hydraulic fluid introduction hole 36, and thus a hydraulic fluid is supplied to the hydraulic pressure chambers via a union bolt, the first hydraulic fluid introduction hole 11, and the second hydraulic fluid introduction hole 36. Further, the bleeder hole 12 communicates with the first hydraulic fluid introduction hole 11, and thus air mixed in the hydraulic fluid introduced into the first hydraulic fluid introduction hole 11, the second hydraulic fluid introduction hole 36, and the hydraulic pressure chambers is discharged to the outside via the bleeder screw 13.

In the present embodiment as described above, regardless of whether the radial-mount vehicle-body-side-opposing caliper half-body 6 or the axial-mount vehicle-body-side-opposing caliper half-body 32 is joined to the vehicle-body-side caliper half-body 5, the second hydraulic fluid introduction hole 16 or the second hydraulic fluid introduction hole 36 communicates with the first hydraulic fluid introduction hole 11, and the hydraulic fluid can be supplied to the cylinder holes 5a and 32a. Accordingly, the caliper bodies having different types to be mounted on the vehicle body can be produced using the same vehicle-body-side caliper half-body 5, and a cost can be reduced.

Further, the radial-mount vehicle-body-side-opposing caliper half-body 6 and the axial-mount vehicle-body-side-opposing caliper half-body 32 have the seal groove 17a, the union holes 18 and 37, and the female screw holes 7b, 7b into which the coupling bolts 7 are fastened, and thus a shape of the vehicle-body-side caliper half-body 5 can be formed as simple as possible, and the cost can be further reduced.

The present invention is not limited to the above embodiments, the communication between the cylinder hole and the hydraulic fluid introduction hole and the communication between the adjacent cylinder holes are not limited to those achieved by a contouring process, and the communication may be achieved by a plunge processing or by casting. Further, the union hole may be provided on the vehicle-body-side caliper half-body, and the bleeder hole may be provided on the radial-mount vehicle-body-side-opposing caliper half-body and the axial-mount vehicle-body-side-opposing caliper half-body. In addition, the number of cylinder holes formed in the caliper half-body is any number.

### Reference Signs List

1: disc brake for vehicle; **2:** disc rotor; 3: caliper body; 3a: bridge portion; 3b: ceiling opening; 4: friction pad; 4a: lining; 4b: back plate; 4c: hanging piece; 5: vehicle-body-side caliper half-body; 5a: cylinder hole; 5b: acting portion; 5c: bridge half body; 5d: first contouring processed portion; 5e: second contouring processed portion; 5f: third contouring processed portion; 5g: disc radial direction outer end surface; 5h: mounting seat surface; 5i: torque receiving portion; 6: radial-mount vehicle-body-side-opposing caliper half-body; 6a: cylinder hole; 6b: acting portion; 6c: bridge half body; 6d: fourth contouring processed portion; 6e: fifth contouring processed portion; 6f: sixth contouring processed portion; 6g: disc outward-rotation-side end surface; 6h: mounting seat surface; 6i: rotation-stop portion; 6j: wall portion; 6k: engaging portion; 6m: mounting bolt insertion hole; 6n: vehicle body mounting portion; 6p: torque receiving portion; 7: coupling bolt; 7a: bolt insertion hole; 7b: female screw hole; 8: joint surface; 9: piston; 10: hydraulic pressure chamber; 11: first hydraulic fluid introduction hole; 12: bleeder hole; 12a: female screw portion; 13: bleeder screw; 13a: male screw portion; 13b: bleeder cap; 14: piston; 15: hydraulic pressure chamber; 16: second hydraulic fluid introduction hole; 17: seal member; 17a: seal groove; 18: union hole; 18a: female screw portion; 19: union bolt; 19a: male screw portion; 19b: hexagonal head portion; 19c: fluid communication hole; 20: brake hose; 21: hose banjo; 22: hanger pin; 23: pad spring; 31: disc brake for vehicle; 32: axial-mount vehicle-body-side-opposing caliper half-body; 32a: cylinder hole; 32b: bridge half body; 32c: seventh contouring processed portion; 32d: eighth contouring processed portion; 32e: ninth contouring processed portion; 32f: disc outward-rotation-side end surface; 32g: mounting bolt insertion hole; 32h: vehicle body mounting arm; 33: caliper body; 33a: bridge portion; 34: piston; 35: joint surface; 36: second hydraulic fluid introduction hole; 37: union hole; 37a: female screw portion; 37b: mounting seat surface; 37c: rotation-stop portion

## Claims

1. A caliper body (3, 33) of a disc brake (1, 31) for a vehicle, wherein:
- the caliper body (3, 33) is capable of being selectively assembled
- by joining, via a joint surface (8, 35), either a radial-mount vehicle-body-side-opposing caliper half-body (6) including a radial mount-type vehicle body mounting portion (6n) or an axial-mount vehicle-body-side-opposing caliper half-body (32) including an axial mount-type vehicle body mounting portion on an opposing vehicle body side of a disc rotor (2) to a vehicle-body-side caliper half-body (5) disposed on a vehicle body-side of the disc rotor (2), and
- by fastening the same by a coupling bolt (7),
- the vehicle-body-side caliper half-body (5), the radial-mount vehicle-body-side-opposing caliper half-body (6), and the axial-mount vehicle-body-side-opposing caliper half-body (32) are respectively formed with a hydraulic fluid introduction hole (11, 16, 36) configured to allow a hydraulic fluid to be introduced into a cylinder hole (32a) from the joint surface (8, 35) toward a bottom portion side of the cylinder hole (32a), and
- the introduction hole (11, 16, 36) formed in the radial-mount vehicle-body-side-opposing caliper half-body (6) and the introduction hole (11, 16, 36) formed in the axial-mount vehicle-body-side-opposing caliper half-body (32) individually communicate with the introduction hole (11, 16, 36) formed in the vehicle-body-side caliper half-body (5) at the joint surface (8, 35).

2. The caliper body (3, 33) according to claim 1, wherein the radial-mount vehicle-body-side-opposing caliper half-body (6) and the axial-mount vehicle-body-side-opposing caliper half-body (32), respectively, have a seal groove (17a) provided on an opening outer periphery of the introduction hole (11, 16, 36) that opens to the joint surface (8, 35), any one of a union hole (18, 37) configured to allow a hydraulic fluid to be introduced into the introduction hole (11, 16, 36) and a bleeder hole (12) configured to allow air in the hydraulic fluid to be discharged, and a female screw hole (7b) into which the coupling bolt is fastened (7).

## Patentansprüche

1. Bremssattelkörper (3, 33) einer Scheibenbremse (1, 31) für ein Fahrzeug, wobei:
- der Bremssattelkörper (3, 33) selektiv zusammengebaut werden kann
- durch Verbinden, über eine Verbindungsfläche (8, 35), entweder eines Radialmontage-Fahrzeugkörperseiten-gegenüberliegenden Bremssattel-Halbkörpers (6), der einen Radialmontage-Fahrzeugkörper-Montageabschnitt (6n) enthält, oder eines Axialmontage-Fahrzeugkörperseiten-gegenüberliegenden Bremssattel-Halbkörpers (32), der einen Axialmontage-Fahrzeugkörper-Montageabschnitt auf einer gegenüberliegenden Fahrzeugkörperseite eines Scheibenrotors (2) enthält, mit einem Fahrzeugkörperseiten-Bremssattel-Halbkörper (5), der auf einer Fahrzeugkörperseite des Scheibenrotors (2) angeordnet ist, und
- durch Befestigen desselben durch einen Kopplungsbolzen (7),
- der Fahrzeugkörperseiten-Bremssattel-Halbkörper (5), der Radialmontage-Fahrzeugkörperseiten-gegenüberliegende Bremssattel-Halbkörper (6) und der Axialmontage-Fahrzeugkörperseiten-gegenüberliegende Bremssattel-Halbkörper (32) jeweils mit einer Hydraulikfluid-Einleitungsöffnung (11, 16, 36) ausgebildet sind, das konfiguriert ist, um zuzulassen, dass ein Hydraulikfluid in ein Zylinderloch (32a) von der Verbindungsfläche (8, 35) zu einer Bodenabschnittsseite des Zylinderlochs (32a) eingeleitet wird, und
- die Einleitungsöffnung (11, 16, 36), das in dem Radialmontage-Fahrzeugkörperseiten-gegenüberliegenden Bremssattel-Halbkörper (6) ausgebildet ist, und die Einleitungsöffnung (11, 16, 36), das in dem Axialmontage-Fahrzeugkörperseiten-gegenüberliegenden Bremssattel-Halbkörper (32) ausgebildet ist, individuell mit dem Einleitungsöffnung (11, 16, 36) kommunizieren, das in dem Fahrzeugkörperseiten-Bremssattel-Halbkörper (5) an der Verbindungsfläche (8, 35) ausgebildet ist.

2. Bremssattelkörper (3, 33) nach Anspruch 1, wobei der Radialmontage-Fahrzeugkörperseiten-gegenüberliegende Bremssattel-Halbkörper (6) und der Axialmontage-Fahrzeugkörperseiten-gegenüberliegende Bremssattel-Halbkörper (32) jeweils eine Dichtungsnut (17a), die an einem Öffnungsaußenumfang der Einleitungsöffnung (11, 16, 36) vorgesehen ist, das sich zu der Verbindungsfläche (8, 35) öffnet, ein beliebiges von einem Verbindungsloch (18, 37), das konfiguriert ist, um zuzulassen, dass ein Hydraulikfluid in die Einleitungsöffnung (11, 16, 36) eingeleitet wird, und einer Entlüftungsöffnung (12), das konfiguriert ist, um zuzulassen, dass Luft in dem Hydraulikfluid abgelassen wird, und ein Innenschraubenloch (7b) aufweisen, in dem der Kopplungsbolzen (7) befestigt ist.

## Revendications

1. Corps d'étrier (3, 33) d'un frein à disque (1, 31) pour un véhicule, dans lequel :
- le corps d'étrier (3, 33) est capable d'être assemblé sélectivement
- en joignant, par l'intermédiaire d'une surface de joint (8, 35), soit un demi-corps d'étrier opposé côté carrosserie de véhicule à montage radial (6) comprenant une partie de montage de carrosserie de véhicule de type à montage radial (6n), soit un demi-corps d'étrier opposé côté carrosserie de véhicule à montage axial (32) comprenant une partie de montage de carrosserie de véhicule de type à montage axial sur un côté de carrosserie de véhicule opposé d'un rotor de disque (2) à un demi-corps d'étrier côté carrosserie de véhicule (5) disposé sur un côté de carrosserie de véhicule du rotor de disque (2), et
- en fixant celui-ci par un boulon de couplage (7),
- le demi-corps d'étrier côté carrosserie de véhicule (5), le demi-corps d'étrier opposé côté carrosserie de véhicule à montage radial (6), et le demi-corps d'étrier opposé côté carrosserie de véhicule à montage axial (32) sont respectivement formés avec un trou d'introduction de fluide hydraulique (11, 16, 36) configuré pour permettre à un fluide hydraulique d'être introduit dans un trou de cylindre (32a) depuis la surface de joint (8, 35) vers un côté de partie inférieure du trou de cylindre (32a), et
- le trou d'introduction (11, 16, 36) formé dans le demi-corps d'étrier opposé côté carrosserie de véhicule à montage radial (6) et le trou d'introduction (11, 16, 36) formé dans le demi-corps d'étrier opposé côté carrosserie de véhicule à montage axial (32) communiquent individuellement avec le trou d'introduction (11, 16, 36) formé dans le demi-corps d'étrier côté carrosserie de véhicule (5) au niveau de la surface de joint (8, 35).

2. Corps d'étrier (3, 33) selon la revendication 1, dans lequel le demi-corps d'étrier opposé côté carrosserie de véhicule à montage radial (6) et le demi-corps d'étrier opposé côté carrosserie de véhicule à montage axial (32), respectivement, ont une rainure d'étanchéité (17a) prévue sur une périphérie externe d'ouverture du trou d'introduction (11, 16, 36) qui s'ouvre sur la surface de joint (8, 35), l'un quelconque parmi un trou de raccordement (18, 37) configuré pour permettre à un fluide hydraulique d'être introduit dans le trou d'introduction (11, 16, 36) et un trou de purge (12) configuré pour permettre à l'air dans le fluide hydraulique d'être évacué, et un trou de vis femelle (7b) dans lequel le boulon de couplage est fixé (7).
